# EUROPÄISCHE PATENTSCHRIFT

(11) **EP 3 035 075 B1**
(45) Veröffentlichungstag und Bekanntmachung des Hinweises auf die Patenterteilung: **23.09.2020**
(21) Anmeldenummer: 15198376.4
(22) Anmeldetag: 08.12.2015
(51) Int. Cl.: G01S 7/00, G01S 7/40, G01S 7/41, G01S 13/56, H05B 47/105

(54) **KONFIGURIERBARER BEWEGUNGSMELDER**
CONFIGURABLE MOTION DETECTOR
DETECTEUR DE MOUVEMENT CONFIGURABLE

(30) Priorität: 16.12.2014 DE 202014106073 U
(43) Veröffentlichungstag der Anmeldung: 22.06.2016
(73) Patentinhaber: Tridonic GmbH & Co KG, 6851 Dornbirn (AT)
(72) Erfinder: Künzli, Markus, 8750 Glarus (CH)
(74) Vertreter: Rupp, Christian

(56) Entgegenhaltungen:
- EP-A1- 2 811 318
- WO-A1-2012/152476
- WO-A2-2014/016735
- US-A1- 2011 181 509
- US-A1- 2013 005 280

## Beschreibung

Die Erfindung bezieht sich auf einen Bewegungsmelder und insbesondere auf einen Bewegungsmelder, der in einem Gebäudetechnikgerät, z.B. einer Leuchte, angeordnet ist. Der Bewegungsmelder besteht im einfachsten Fall aus einem Sender, einem Empfänger und einer Steuereinheit, die von einem Empfänger erfasste Signale auswertet.

Ansatzpunkt der Erfindung ist, dass ein solcher Bewegungsmelder unter Umständen nicht ohne Weiteres zugänglich ist und dass es daher ebenfalls nicht ohne Weiteres möglich ist, den Bewegungsmelder zu programmieren, konfigurieren oder parametrisieren, bzw. ihre Einstellung zu verändern.

Wenn der Bewegungsmelder in einer Leuchte oder einem Gebäudetechnikgerät integriert ist, kann eine Änderung der Einstellung an dem Bewegungsmelder zunächst eine Demontage und ein Zerlegen des Gebäudetechnikgeräts erfordern. An dem Bewegungsmelder können Einstellvorrichtungen wie Potentiometer, Taster, Stellschrauben, usw. vorgesehen sein, die im eingebauten Zustand in dem Gebäudetechnikgerät nicht zugänglich sind. Zudem kann ein Gebäudetechnikgerät weitere Schutzmaßnahmen aufweisen, beispielsweise einen Berührungsschutz für spannungsführende Bauteile, der zunächst zu entfernen ist, sofern dies zulässig ist.

Zudem kann es auch notwendig sein, eine das Gebäudetechnikgerät versorgende Versorgungsspannung abzuschalten, was zu einer Beeinträchtigung der Funktion anderer Gebäudetechnikgeräte, beispielsweise anderer Leuchten, am gleichen Versorgungsstrang führen kann. Einzustellende Parameter eines Bewegungsmelders können beispielsweise eine Verzögerungszeit, ein Schwellenwert, eine Sensor-Sensitivitäten bzw. eine Empfindlichkeit des Empfängers, usw. sein. Es können mit dem Bewegungsmelder auch weitere Sensoren, beispielsweise ein Tageslichtsensor, Rauchmelder, Feuchtigkeitssensor, Temperatursensor, ... verbunden sein, deren Parameter ebenfalls veränderbar sein sollen. Schließlich kann auch eine Einstellbarkeit von Geräteparametern des Gebäudetechnikgeräts gewünscht sein, z.B. von Betriebsparameteren eines Gebäudetechnik-Betriebsgeräts. Es kann dazu vorgesehen sein, dass der Bewegungsmelder mit dem Betriebsgerät des Gebäudetechnikgeräts verbunden ist. Beispielsweise kann der Bewegungsmelder mit dem Betriebsgerät zum Betrieb wenigstens eines Leuchtmittels, insbesondere wenigstens einer LED, verbunden sein, das in einer Leuchte angebracht ist.
Auch hier stellt sich das Problem, dass eine Konfiguration bzw. Parametrisierung der Einstellung unter Umständen nur schwer möglich ist, insbesondere dann, wenn das Betriebsgerät oder andere zu konfigurierende Komponenten nicht über einen Gebäudetechnikbus beispielsweise mit einer Zentraleinheit verbunden sind und somit von dieser keine Konfigurationsinstruktionen erhalten können. Weiter stellt sich das Problem, dass das Betriebsgerät Einstellvorrichtungen aufweisen kann, die jedoch im eingebauten Zustand nicht zugänglich sind.

US 2013/0005280 A1 beschreibt einen radarbasierten Bewegungsmelder, der in regelmäßigen, vordefinierten und nur für die Kommunikation vorgesehenen Zeitintervallen mit dem Radarempfänger Konfigurationsdaten empfängt. Die Erfindung stellt dagegen zur Lösung oben genannter Probleme einen Bewegungsmelder, ein Gebäudetechnikgerät, ein Konfigurations-Gerät und eine Kombination daraus gemäß der unabhängigen Ansprüche bereit. Weiterbildungen der Erfindung sind Gegenstand der abhängigen Ansprüche.

In einem ersten Aspekt wird ein radarbasierter Bewegungsmelder bereitgestellt, wobei der Bewegungsmelder aufweist:
einen Radarsender, einen Radarempfänger, und
eine Steuereinheit, die dazu eingerichtet ist, den Radarsender zum Aussenden anzusteuern und von dem Radarempfänger empfangene Radarsignale auszuwerten, wobei die Steuereinheit dazu eingerichtet ist, ein empfangenes Radarsignal als Konfigurierungssignal für wenigstens einen Betriebsparameter des Bewegungsmelders zu verwenden, wenn das empfangene Radarsignal ein vorgegebenes signaltechnisches Kriterium erfüllt.

Der Bewegungsmelder kann mit einem Betriebsgerät zum Betrieb von Leuchtmitteln, insbesondere wenigstens einer LED, verbunden sein. Der Bewegungsmelder kann eine oder mehrere Radarantennen aufweisen und/oder funktional damit verbunden sein.

Die Steuereinheit kann ein an dem Radarempfänger ausgewertetes Radarsignal diskriminieren, beispielsweise hinsichtlich Frequenz, Intensität und/oder Richtung. Die Steuereinheit kann eine vorbestimmte Signalfolge des wenigstens einen ausgewerteten Radarsignals als Konfigurationssignal auszuwerten, und in Antwort darauf insbesondere in dem Bewegungsmelder und/oder einem damit verbundenen Gerät, insbesondere dem Betriebsgerät, vorbestimmte Betriebsparameter setzen und/oder verändern. Die Steuereinheit kann einen Speicher aufweisen oder funktional mit einem Speicher verbunden sein, und dort abgespeicherte Parameter verändern.

Die Steuereinheit wechselt in einen Konfigurations-Modus und/oder veranlasst ein damit verbundenes Gerät dazu, in einen Konfigurations-Modus zu wechseln, wenn das wenigstens eine ausgewertete Signal einem vorbestimmten Kriterium entspricht.

Die Steuereinheit führt in dem Konfigurations-Modus auf Basis des ausgewerteten Radarsignals eine Änderung von Betriebsparametern des Bewegungsmelders durch, Die Steuereinheit kann den Konfigurations-Modus beenden, wenn das ausgewertete Radarsignal dem signaltechnischen Kriterium oder einem anderen signaltechnischen Kriterium entspricht und/oder nach einer vorbestimmten Zeitdauer.
Die Steuereinheit kann nach Beendigung des Konfigurations-Modus vorzugsweise wieder in einen normalen Betriebsmodus wechseln, bzw. ein damit verbundenes Gerät dazu veranlassen, in einen normalen Betriebsmodus zu wechseln. Der Bewegungsmelder kann eine Dekodiereinheit umfassen, um in Radarsignalen kodierte Daten dekodiert.

Der Bewegungsmelder kann eine Kodiereinheit aufweisen, die Daten in Radarsignalen kodiert.
In einem weiteren Aspekt stellt die Erfindung ein Gebäudetechnikgerät bereit, insbesondere eine Leuchte, mit wenigstens einem Bewegungsmelder wie oben beschrieben. Das Gebäudetechnikgerät kann wenigstens eine Radarantenne aufweisen.
In noch einem weiteren Aspekt wird ein Konfigurations-Gerät bereitgestellt, aufweisend eine Kodiereinheit, die dazu eingerichtet ist, Konfigurationsdaten für einen erfindungsgemäßen Bewegungsmelder in Radarsignalen zu kodieren und zu versenden, und eine Dekodiereinheit, die dazu eingerichtet ist, mittels Radarsignalen, durch einen erfindungsgemäßen Bewegungsmelder kodierte Daten zu dekodieren, insbesondere hinsichtlich ihrer Intensität oder Frequenz, sowie wenigstens eine Radarantenne zum Senden und/oder Empfangen von Radarsignalen.

In einem noch weiteren Aspekt wird eine Kombination aus einem Bewegungsmelder und/oder einem Gebäudetechnikbetriebsgerät, vorzugsweise einer Leuchte, und/oder einem Konfigurations-Gerät bereitgestellt, wie sie oben beschrieben wurden.

Das Konfigurations-Gerät kann eine Benutzerschnittstelle aufweisen.
Die Erfindung wird nunmehr auch mit Bezug auf die Figuren beschrieben. Es zeigen:
- Fig. 1: schematisch ein erstes Beispiel gemäß der Erfindung;
- Fig. 2: schematisch ein zweites Beispiel gemäß der Erfindung; und
- Fig. 3: schematisch ein Anordnung von erfindungsgemäßen Komponenten.

Die Erfindung zielt nun darauf ab, dass ein Bewegungsmelder, der hochfrequente elektromagnetischen Signale vorzugsweise mittels eines Radarempfängers erfassen und/oder mittels eines Radarsenders emittieren kann, verwendet wird um die eingehenden elektromagnetischen Signale, vorzugsweise Radarsignale zu diskriminieren, beispielsweise hinsichtlich ihrer Frequenz, Intensität, und ggf. Richtung, wenn z.B. mehrere Empfänger/Antennen für die elektromagnetischen Signale vorgesehen sind. Es kann sich bei dem Bewegungsmelder insbesondere um einen auf dem Radarprinzip basierenden Bewegungsmelder handeln. Der Bewegungsmelder und/oder das Gebäudetechnikgerät kann/können dann eine oder mehrere Radarantennen aufweisen, die zum Empfang von Radarsignalen dienen.

Dabei ist in dem Bewegungsmelder ein signaltechnisches Kriterium oder ein Kriteriensatz vorgesehen, der erfüllt werden muss, um eine Änderung von Parametern des Bewegungsmelders oder damit verbundener Geräte zu verursachen. Bei Erfüllung dieser Kriterien interpretiert nunmehr eine Steuereinheit des Bewegungsmelders die eingehenden Signale nicht mehr als Bewegungssignal, sondern als Konfigurationssignal. Der Bewegungsmelder weist also neben dem Radarempfänger eine Steuereinheit auf, die die von dem Radarempfänger ausgegebenen elektrischen Signale auswertet.

Es kann mehrere Möglichkeiten geben, wie ein Signal anhand der genannten signaltechnischen Kriterien ausgewertet wird. Im einfachsten Fall erfolgt die Erzeugung eines entsprechenden Signals durch eine gezielte Reflexion, beispielsweise eine Gestensteuerung, eines von dem Radarsenders ausgesandten hochfrequenten Signals. Alternativ oder zusätzlich dazu ist es auch möglich, dass die hochfrequenten Signale zur Parametrisierung extern erzeugt werden, beispielsweise durch ein spezielles Konfigurations-Gerät mit einer Benutzerschnittstelle, das abhängig von eingegebenen Daten diese kodiert in hochfrequente elektromagnetische Signale umsetzt und an den Radarempfänger überträgt. Die hochfrequenten elektromagnetischen Wellen (z.B. Radarsignale) können die entsprechenden Parameter in Bursts kodieren oder z.B. durch ihre Intensität oder Frequenz.

Die Erfindung bezieht sich also vorwiegend auf die Konfiguration eines Bewegungsmelders, der Radarsignale empfangen kann und die empfangen Informationen hinsichtlich eines Kriteriums oder mehrerer Kriterien mittels einer Steuereinheit diskriminiert. Wird ein Kriterium erfüllt können insbesondere darauffolgende Informationen, die mittels der Radarsignale übermittelt werden, ausgewertet werden, um eine Veränderung von Parametern in dem Bewegungsmelder bzw. in damit verknüpften oder verbundenen Geräten durchzuführen. Im Folgenden wird der Einfachheit halber von einem Bewegungsmelder gesprochen, obwohl zu verstehen ist, dass auch andere Sensoren, die elektromagnetische Signale erfassen, auswerten und/oder aussenden können, zum Einsatz kommen können.

Der Bewegungsmelder ist beispielsweise in einer Leuchte verbaut. Einzustellende Parameter können Erkennungssensitivität, eine Verzögerungszeit, oder, wie beispielsweise bei Tageslichtsensoren, ein Schwellenwert sein, mit dem eingestellt werden kann, ab wann der Tageslichtsensor Tag oder Nacht erkennt.

Normalerweise erfolgt eine Einstellung an dem entsprechenden Bewegungsmelder oder Gerät beispielsweise mittels eines Tasters, eines Potentiometers oder anderer Einstellungsvorrichtungen. Wie bereits geschildert, können diese Einstellungsvorrichtungen jedoch schwer zugänglich sein, wenn die Geräte in einem Gebäudetechnikgerät, wie einer Leuchte verbaut sind.

Wenn der Benutzer nun einen Parameter verändern will, muss er das Gebäudetechnikgerät öffnen und ggf. die Versorgungsspannung deaktivieren um Verletzungen zu vermeiden. Andererseits müssen spannungsführende Teile in dem Gerät besonders gesichert sein, da beispielsweise das Gebäudetechnikgerät mit Spannung versorgt sein muss, wenn die Veränderung der Parameter beispielsweise durch eine Eingabe alphanumerischer Codes erfolgen soll. Diese können einerseits den Zugang zu dem Bewegungsmelder erschweren, andererseits erhöhen sie auch die Kosten zur Herstellung des Gebäudetechnikgeräts, da z.B. spezielle Isolationen vorgesehen sein müssen, oder die Schaltkreise des Gebäudetechnikgeräts beispielsweise unter Verwendung von Sicherheitskleinspannungsbarrieren (SELV-Barrieren) geschützt sein müssen.

Eine Veränderung der Parameter kann durch eine von dem Radarempfänger bzw. durch eine entsprechende Auswertung eines durch diesen ausgegebenen Signals durch die Steuereinheit erfasste Gesten erfolgen. Dies kann beispielsweise eine Handbewegung sein, die in einem von dem Bewegungsmelder überwachten Bereich erfasst wird.
Der Bewegungsmelder erfasst auch normale Bewegungen. Lediglich ein spezifisches Bewegungsmuster, bzw. eine Abfolge von Bewegungen wird anhand der von dem Radarempfänger an die Steuereinheit ausgegebenen Signale dahingehend ausgewertet, dass die ausgegebenen Signale dem vorbestimmten Kriterium entsprechen, das eine Änderung von Parametern anzeigt. Es kann auch geprüft werden ob die Erfassten Signale, und damit die Geste, in einem Toleranzbereich liegen, so dass auch leicht abweichende Gesten entsprechend ausgewertet werden können.

Im Ergebnis muss das Gebäudetechnikgerät also nicht geöffnet werden, um Einstellungen vorzunehmen. Auch werden in dem Gebäudetechnikgerät keine speziellen Sicherungsvorrichtungen benötigt, wodurch die Kosten des Gebäudetechnikgeräts reduziert werden können. Beispielsweise können weniger Aufwendungen für einen elektrischen Schutz in dem Gebäudetechnikgerät vorgesehen sein.

Der Bewegungsmelder bzw. seine Steuereinheit können einzelne Bewegungen oder Bewegungsmuster auswerten. So kann beispielsweise anhand einer Nachschlagetabelle (Lookup table) ein Vergleich der Bewegungsmuster auf Basis der ausgewerteten Signale erfolgen und entsprechend eine Parameteränderung vorgenommen werden, wenn beispielsweise eine Bewegungsfolge der Anweisung, einen spezifischen Betriebsparameter bzw. eine vordefinierte Gruppe von Betriebsparametern zu setzen, entspricht.

Durch eine bestimmte Bewegungsfolge kann z.B. auch ein Betriebsmodus bzw. ein Konfigurations-Modus detektiert bzw. eingestellt werden, innerhalb dem Bewegungen bzw. erfasste Signale von dem Bewegungsmelder als Anweisung zum Verändern von Parametern ausgewertet werden. Dieser Modus kann dann beispielsweise durch eine definierte weitere Bewegungsfolge, bzw. wenn das bestimmtes signaltechnisches Kriterium oder ein anders Kriterium erkannt wird, wieder beendet werden.
Beispielsweise ist es dem Bewegungsmelder möglich, Entfernungen bzw. Entfernungsänderungen zu erkennen, mittels der reflektierten bzw. durch den Radarempfänger erfassten Signale. So kann beispielsweise eine Bewegung in einer bestimmten Entfernung, z.B. nahe an dem Bewegungsmelder, von einer Bewegung unterschieden werden, die in einem anderen Abstand zu dem Bewegungsmelder erfolgt (z.B. weiter entfernt).

Beispielsweise kann eine Bewegung, die zur Veränderung der Betriebsparameter des Bewegungsmelders, bzw. damit verbundener Geräte dienen soll, in einem vorbestimmten Abstand oder innerhalb eines vorbestimmten Abstandbereichs von dem Gebäudetechnikgerät im Erfassungsbereich des Bewegungsmelders durchgeführt werden, während die normale Bewegungserkennung in einem größeren Abstand von dem Gebäudetechnikgerät erfolgt. Ein Benutzer kann eine Bewegung in einem Bereich von 5-20 cm von dem Gebäudetechnikgerät verwenden, um Parameter zu verändern, während der Bewegungsmelder normalerweise Bewegungen in einem Abstand von beispielsweise 1-5 m auswertet.

Somit kann beispielsweise ein signaltechnisches Kriterium, das eine Parameteränderung bzw. den Wechsel in einen Konfigurationsmodus auslöst, die Entfernung der erkannten Bewegung zu dem Bewegungsmelder sein. Wird in einen Konfigurationsmodus gewechselt, so kann dieser Konfigurationsmodus auch nur für eine bestimmte Zeitdauer definiert sein. In den Konfigurationsmodus kann ein Zähler/Timer laufen, der nach einer vorbestimmten Zeit automatisch einen Wechsel in den normalen Betriebsmodus veranlasst.

In dem Konfigurationsmodus kann dann beispielsweise die Erkennungssensitivität des Bewegungsmelders bzw. des Radarempfängers reduziert werden, oder es können in diesem Modus andere Informationen, beispielsweise Geschwindigkeits- oder Richtungsinformationen ausgewertet werden.
Der Bewegungsmelder und/oder das Gebäudetechnikgerät kann/können zudem Mittel aufweisen, um optisch oder akustisch zu signalisieren, wenn eine Veränderung eines Betriebsparameters erfolgreich oder nicht erfolgreich ausgeführt wurde. Im Fall einer Leuchte kann dies z.B. durch eine Veränderung der Lichtemission erfolgen. Der Bewegungsmelder, oder ein damit verbundenes Gerät, kann somit einen Status oder eine Rückantwort signalisieren.

Selbstverständlich kann auch vorgesehen sein, dass beispielsweise ein Konfigurationsgerät verwendet wird, um elektromagnetische Signale, die von dem Bewegungsmelder ausgewertet werden können, an das Gebäudetechnikgerät zu übertragen. Insbesondere kann ein Radarsender verwendet werden, um Informationen an den Radarempfänger zu übermitteln. Das entsprechende Konfigurationsgerät kann eine Benutzerschnittstelle aufweisen, über die Parameter bzw. deren Änderungen eingegeben werden können. So kann beispielsweise das Konfigurationsgerät die geänderten Parameter kodiert an den Radarempfänger übermitteln, beispielsweise indem die Intensität der emittierten elektromagnetischen Signale bzw. deren Frequenz verändert oder ein bestimmter Burstmodus gewählt wird, der von dem Radarempfänger bzw. der Steuereinheit als Konfigurationsänderung erkannt wird.

Zur Erkennung von bestimmten Bewegungen kann der Bewegungsmelder eine oder mehrere Antennen aufweisen oder damit funktional verbunden sein. Die Antennen können auch an oder in das Gebäudetechnikgerät integriert sein, dass den Bewegungsmelder umfasst. Es ist zu verstehen, dass ein Gebäudetechnikgerät auch mehrere Radarempfänger und/oder Radarsender aufweisen kann, die entsprechend eine Auswertung einer Bewegungsrichtung, einer Geschwindigkeit, einer Beschleunigung und/oder einer Distanz erlauben.

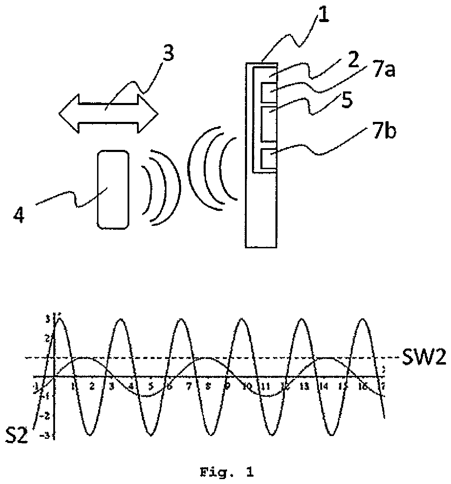

Fig. 1 zeigt schematisch, ein Gebäudetechnikgerät 1 mit einem Bewegungsmelder 2 gemäß der Erfindung. Der Bewegungsmelder 2 weist eine Steuereinheit 5, einen Radarempfänger 7a und einen Radarsender 7b auf. Der Bewegungsmelder 2 bzw. der Radarempfänger 7a erfasst Radarsignale, die von einem Gegenstand 4 reflektiert oder ausgesendet werden. So kann der Bewegungsmelder 2 eine Bewegungsrichtung 3 eines Gegenstands 4, beispielsweise einer Hand, erkennen. Der Radarempfänger 7a kann selbst oder mittels der Steuereinheit 5 beispielsweise eine Entfernung des bewegten Gegenstands 4 zu dem Bewegungsmelder 2 bestimmen, indem beispielsweise von dem Radarempfänger 7a und/oder der Steuereinheit 5 eine Amplitude eines Signals S2 ausgewertet wird, das von dem Radarempfänger 7a ausgegeben wird. Wenn dieses Signal z.B. über einem Schwellenwert SW2 liegt, wird erkannt, dass das signaltechnische Kriterium erfüllt ist und eine Veränderung der Parameter kann erfolgen.
Auch kann von dem Bewegungsmelder 2 ein bestimmtes Bewegungsmuster, beispielsweise eine langsame Bewegung oder eine Bewegung mit einer bestimmten Geschwindigkeit oder aber die Frequenz einer Bewegung bzw. eine Kombination daraus verwendet werden, um eine entsprechende Parameterveränderung der Betriebsparameter zu erzeugen.

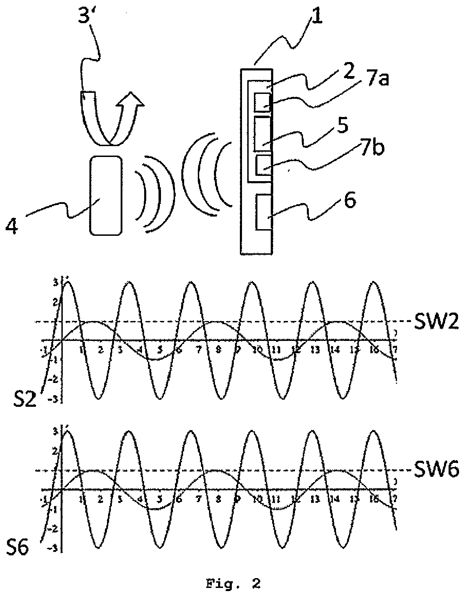

Fig. 2 zeigt eine alternative Ausführungsform, die im Wesentlichen der aus Fig. 1 entspricht. Entsprechende Komponenten sind daher analog bezeichnet. Hier ist jedoch zusätzlich ein zweiter Bewegungsmelder 6 vorgesehen, der wie der erste Bewegungsmelder 2 ausgestaltet sein kann. Die Bewegungsmelder 2 und 6 erlauben es dann verschiedene Bewegungsrichtungen auszuwerten. So kann der Gegenstand 4 beispielsweise dazu verwendet werden, einem bestimmten Bewegungspfad 3' zu folgen, um die Bewegungsmelder 2, 6 bzw. die Steuereinheit 5 in einen entsprechenden Konfigurationsmodus zu versetzten oder um entsprechende Betriebsparameter verändern zu können. Der Bewegungsmelder 6 kann entweder auch mit der Steuereinheit 5 verbunden sein und/oder diese nutzen oder analog zum Bewegungsmelder 2 eine eigene Steuereinheit (nicht gezeigt) aufweisen. Beispielsweise kann eine kreisförmige Bewegung als Konfigurationsbefehl erkannt werden, um eine Parametrisierung wenigstens eines der Bewegungsmelder 2, 6, bzw. eines damit verbundenen Geräts, auszulösen.

Werden zwei oder mehrere Bewegungsmelder 2, 6 eingesetzt, kann selbstverständlich ein Signal von jedem Bewegungsmelder 2, 6 S2, S6 zum Beispiel hinsichtlich seiner Amplitude ausgewertet werden. Dies ist exemplarisch in Fig. 2 unten gezeigt, in der der Bewegungsmelder 2 das Signal S2 hinsichtlich des Schwellenwerts SW2 auswertet, während z.B. der Bewegungsmelder 6 das Signal S6 hinsichtlich des Schwellenwertes SW6 auswertet. Die Auswertung kann jedoch auch mittels lediglich einer Steuereinheit erfolgen. Der zweite Bewegungsmelder 6 weist dann vorzugsweise nur einen Radarempfänger und/oder - sender auf.

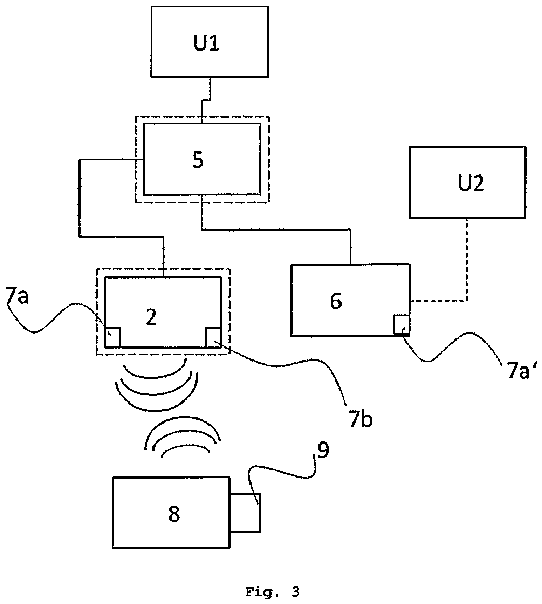

Fig. 3 veranschaulicht exemplarische Verbindungen der Bewegungsmelder 2, 6 mit anderen Geräten U1, U2. So kann die Steuereinheit 5 beispielsweise mit einer ersten Einheit U1 verbunden so sein, dass Betriebs- /Konfigurationsparameter dieser ersten Einheit U1 von der Steuereinheit 5 gesetzt/verändert werden können. Darunter ist auch zu verstehen, dass die Steuereinheit 5 und/oder z.B. der Bewegungsmelder 6 Signale an die Einheiten U1, U2 ausgeben kann, die diese dazu veranlassen, eine entsprechende Parameteränderung durchzuführen.

Dies ist schematisch mit der gestrichelten Verbindung zwischen dem zweiten Bewegungsmelder 6 und einer zweiten Einheit U2 gezeigt. Die gestrichelten Kästen um den schematisch dargestellten Bewegungsmelder 2 und die Steuereinheit 5 deuten an, dass diese Komponenten auch bautechnisch in einem Gerät verbaut sein können. Wenigstens eine der Einheiten U1, U2 kann ein Betriebsgerät sein, insbesondere ein Betriebsgerät zum Betreiben einer LED.

Schematisch ist zudem ein Konfigurationsgerät 8 gezeigt, das dazu eingerichtet ist, auf den Bewegungsmelder 2 (und/oder den Bewegungsmelder 6) abgestimmt elektromagnetische Signale zu übertragen, insbesondere an die Radarempfänger 7a, 7a' der Bewegungsmelder 2, 6. Das Konfigurationsgerät 8 kann eine Benutzerschnittstelle 9 aufweisen, die dazu dient, Eingaben von einem Benutzer zu erfassen und entsprechend kodierte Signale an die Bewegungsmelder 2, 6 zu übertragen. Zudem kann das Konfigurationsgerät 8 durch Übermittelung entsprechender Signale auch aktuelle oder in den Bewegungsmeldern 2, 6 bzw. deren Steuereinheiten, sofern vorhanden, gespeicherte Informationen, besonders bezüglich ihrer Konfiguration auslesen. Diese Informationen können dann an der Benutzerschnittstelle 9 ausgegeben werden. Die Ausgelesenen Informationen werden dann durch das Konfigurationsgerät 8 dekodiert.

Die in den Bewegungsmeldern 2, 6 und/oder in dem Konfigurationsgerät 8 benötigten Sende-, Empfangs-, Kodier- und Dekodiereinheiten sind lediglich für die Bewegungsmeldern 2, 6 als Radarempfänger 7a und 7a' und Radarsender 7b gezeigt, ansonsten jedoch nicht gezeigt. Jedoch ist zu verstehen, dass die Bewegungsmelder 2, 6 auf ein Signal hin Konfigurationsdaten über eine Sendeeinheit versenden können, die auch dazu dient, die für die Bewegungserfassung genutzten elektromagnetischen Signale zu emittieren. Weiter ist zu verstehen, dass die Bewegungsmelder 2, 6 Konfigurationsinformationen auch von damit verbundenen Geräten erfassen, abfragen und/oder übermitteln können.

## Patentansprüche

1. Radarbasierter Bewegungsmelder (2),
wobei der Bewegungsmelder (2) aufweist:
- einen Radarsender (7b),
- einen Radarempfänger (7a), und
- eine Steuereinheit (5), die dazu eingerichtet ist, den Radarsender (7b) zum Aussenden anzusteuern und von dem Radarempfänger (7a) empfangene Radarsignale auszuwerten,
wobei
die Steuereinheit (5) dazu eingerichtet ist, ein empfangenes Radarsignal als Konfigurierungssignal für wenigstens einen Betriebsparameter des Bewegungsmelders (2) zu verwenden, wenn das empfangene Radarsignal ein vorgegebenes signaltechnisches Kriterium erfüllt,
**dadurch gekennzeichnet, dass**
die Steuereinheit (5) dazu eingerichtet ist, in einen Konfigurations-Modus zu wechseln und/oder ein damit verbundenes Gerät (U1) dazu zu veranlassen, in einen Konfigurations-Modus zu wechseln, wenn wenigstens ein ausgewertetes Radarsignal (S2) einem vorbestimmten signaltechnischen Kriterium entspricht,
wobei die Steuereinheit (5) ferner dazu eingerichtet ist, in dem Konfigurations-Modus auf Basis des ausgewerteten Radarsignals (S2) eine Änderung von Betriebsparametern des Bewegungsmelders (2) durchzuführen.

2. Bewegungsmelder (2) nach Anspruch 1, wobei der Bewegungsmelder (2) mit einem Betriebsgerät zum Betrieb von Leuchtmitteln, insbesondere wenigstens einer LED, verbunden ist.

3. Bewegungsmelder (2) nach Anspruch 1 oder 2, wobei der Bewegungsmelder (2) eine oder mehrere Radarantennen aufweist und/oder funktional damit verbunden ist.

4. Bewegungsmelder (2) nach einem der vorgehenden Ansprüche, wobei die Steuereinheit (5) dazu eingerichtet ist, ein an dem Radarempfänger (7a) ausgewertetes Radarsignal (S2) zu diskriminieren, beispielsweise hinsichtlich Frequenz, Intensität und/oder Richtung.

5. Bewegungsmelder (2) nach einem der vorgehenden Ansprüche, wobei die Steuereinheit (5) dazu eingerichtet ist, eine vorbestimmte Signalfolge wenigstens eines ausgewerteten Radarsignals (S2) als Konfigurationssignal auszuwerten, und wobei die Steuereinheit (5) dazu eingerichtet ist, in Antwort darauf insbesondere in dem Bewegungsmelder (2) und/oder einem damit verbundenen Gerät (U1), vorbestimmte Betriebsparameter zu setzen und/oder zu verändern.

6. Bewegungsmelder (2) nach Anspruch 2 und 5, wobei das mit dem Bewegungsmelder (2) verbundene Gerät (U1) das Betriebsgerät ist.

7. Bewegungsmelder (2) nach einem der vorgehenden Ansprüche, wobei die Steuereinheit (5) dazu eingerichtet ist, den Konfigurations-Modus zu beenden, wenn das ausgewertete Radarsignal dem signaltechnischen Kriterium oder einem anderen signaltechnischen Kriterium entspricht und/oder nach einer vorbestimmten Zeitdauer.

8. Bewegungsmelder (2) nach einem der vorgehenden Ansprüche, wobei die Steuereinheit (5) dazu eingerichtet ist, nach Beendigung des Konfigurations-Modus wieder in einen normalen Betriebsmodus zu wechseln, bzw. ein damit verbundenes Gerät dazu. zu veranlassen, in einen normalen Betriebsmodus zu wechseln.

9. Bewegungsmelder (2) nach einem der vorgehenden Ansprüche, wobei der Bewegungsmelder (2) eine Dekodiereinheit umfasst, die dazu eingerichtet ist in Radarsignalen kodierte Daten zu dekodieren.

10. Bewegungsmelder (2) nach einem der vorgehenden Ansprüche, wobei der Bewegungsmelder (2) eine Kodiereinheit aufweist, die dazu eingerichtet ist, Daten in den Radarsignalen zu kodieren.

11. Gebäudetechnikgerät (1), insbesondere Leuchte, mit wenigstens einem Bewegungsmelder (2) nach einem der vorstehenden Ansprüche.

12. Gebäudetechnikgerät (1) nach Anspruch 11, das wenigstens eine Radarantenne aufweist.

13. Konfigurations-Gerät (8), aufweisend eine Kodiereinheit, die dazu eingerichtet ist, Konfigurationsdaten für einen Bewegungsmelder nach Anspruch 9 in Radarsignalen zu kodieren und zu versenden, und eine Dekodiereinheit, die dazu eingerichtet ist, mittels Radarsignalen, durch einen Bewegungsmelder nach Anspruch 10 kodierte Daten zu dekodieren, insbesondere hinsichtlich ihrer Intensität oder Frequenz, sowie wenigstens eine Radarantenne zum Senden und/oder Empfangen von Radarsignalen.

14. Konfigurations-Gerät (8) nach Anspruch 13, wobei das Konfigurations-Gerät (8) eine Benutzerschnittstelle (9) aufweist.

15. Kombination aus einem Bewegungsmelder (2) nach Anspruch 1 oder einem Gebäudetechnikbetriebsgerät (1) nach Anspruch 11, vorzugsweise einer Leuchte, mit einem Konfigurations-Gerät (8) nach Anspruch 13.

## Claims

1. Radar-based motion detector (2),
wherein the motion detector (2) has:
- a radar transmitter (7b),
- a radar receiver (7a), and
- a control unit (5) that is configured to control the radar transmitter (7b) for transmitting and to evaluate radar signals received by the radar receiver (7a),
wherein
the control unit (5) is configured to use a received radar signal as a configuration signal for at least one operating parameter of the motion detector (2) if the received radar signal meets a predetermined technical signal criterion, **characterized in that**
the control unit (5) is configured to change to a configuration mode and/or to cause a device (U1) connected thereto to change to a configuration mode if at least one evaluated radar signal (S2) corresponds to a predetermined technical signal criterion, wherein the control unit (5) is furthermore configured to implement a change of operating parameters of the motion detector (2) in the configuration mode on the basis of the evaluated radar signal (S2).

2. Motion detector (2) according to Claim 1, wherein the motion detector (2) is connected to an operating device for operating illuminants, in particular at least one LED.

3. Motion detector (2) according to Claim 1 or 2, wherein the motion detector (2) has one or more radar antennas and/or is operatively connected thereto.

4. Motion detector (2) according to one of the preceding claims, wherein the control unit (5) is configured to discriminate a radar signal (S2) evaluated in the radar receiver (7a), for example with regard to frequency, intensity, and/or direction.

5. Motion detector (2) according to one of the preceding claims, wherein the control unit (5) is configured to evaluate a predetermined signal sequence of at least one evaluated radar signal (S2) as a configuration signal, and wherein the control unit (5) is configured to set and/or modify predetermined operating parameters in response thereto, in particular in the motion detector (2) and/or a device (U1) connected thereto.

6. Motion detector (2) according to Claims 2 and 5, wherein the device (U1) connected to the motion detector (2) is the operating device.

7. Motion detector (2) according to one of the preceding claims, wherein the control unit (5) is configured to terminate the configuration mode if the evaluated radar signal corresponds to the technical signal criterion or another technical signal criterion, and/or after a predetermined period of time.

8. Motion detector (2) according to one of the preceding claims, wherein the control unit (5) is configured to switch back to a normal operating mode after termination of the configuration mode, or to cause a device connected thereto to switch to a normal operating mode.

9. Motion detector (2) according to one of the preceding claims, wherein the motion detector (2) comprises a decoding unit which is configured to decode data encoded in radar signals.

10. Motion detector (2) according to one of the preceding claims, wherein the motion detector (2) has an encoding unit which is configured to encode data in the radar signals.

11. Building engineering device (1), in particular a luminaire, having at least one motion detector (2) according to one of the preceding claims.

12. Building engineering device (1) according to Claim 11, having at least one radar antenna.

13. Configuration device (8) having an encoding unit which is configured to encode and transmit configuration data for a motion detector according to Claim 9 in radar signals, and a decoding unit which is configured to decode data encoded by a motion detector according to Claim 10 by means of radar signals, in particular with regard to their intensity or frequency, and at least one radar antenna for transmitting and/or receiving radar signals.

14. Configuration device (8) according to Claim 13, wherein the configuration device (8) has a user interface (9).

15. Combination of a motion detector (2) according to Claim 1 or a building engineering operating device (1) according to Claim 11, preferably a luminaire, with a configuration device (8) according to Claim 13.

## Revendications

1. Détecteur de mouvement (2) basé sur la technique radar,
dans lequel le détecteur de mouvement (2) présente :
- un émetteur radar (7b),
- un récepteur radar (7a), et
- une unité de commande (5), laquelle est conçue pour commander l'émetteur radar (7b) pour l'émission et pour évaluer les signaux radar reçus par le récepteur radar (7a),
dans lequel l'unité de commande (5) est conçue pour utiliser un signal radar reçu en tant que signal de configuration pour au moins un paramètre de fonctionnement du détecteur de mouvement (2) lorsque le signal radar reçu satisfait à un critère de signalisation prédéterminé, **caractérisé en ce que**
l'unité de commande (5) est conçue pour passer dans un mode de configuration et/ou pour amener un appareil (U1) raccordé à elle à passer dans un mode de configuration lorsqu'au moins un signal radar (S2) évalué satisfait à un critère de signalisation prédéterminé, l'unité de commande (5) étant en outre conçue pour, dans le mode de configuration, effectuer en fonction du signal radar (S2) évalué une modification des paramètres de fonctionnement du détecteur de mouvement (2).

2. Détecteur de mouvement (2) selon la revendication 1, dans lequel ledit détecteur de mouvement (2) est raccordé à un appareil de fonctionnement destiné au fonctionnement de moyens d'éclairage, en particulier d'au moins une LED.

3. Détecteur de mouvement (2) selon la revendication 1 ou 2, dans lequel ledit détecteur de mouvement (2) présente au moins une ou plusieurs antennes radar et/ou est fonctionnellement connecté à celles-ci.

4. Détecteur de mouvement (2) selon l'une quelconque des revendications précédentes, dans lequel l'unité de commande (5) est conçue pour discriminer un signal radar (S2) évalué au niveau du récepteur radar (7a), par exemple en ce qui concerne la fréquence, l'intensité et/ou la direction.

5. Détecteur de mouvement (2) selon l'une quelconque des revendications précédentes, dans lequel l'unité de commande (5) est conçue pour évaluer une séquence de signaux prédéterminée d'au moins un signal radar (S2) évalué en tant que signal de configuration, et dans lequel l'unité de commande (5) est conçue pour, en réponse à cela, régler et/ou modifier des paramètres de fonctionnement prédéterminés, en particulier dans le détecteur de mouvement (2) et/ou un appareil (U1) raccordé à lui.

6. Détecteur de mouvement (2) selon les revendications 2 et 5, dans lequel l'appareil (U1) raccordé au détecteur de mouvement (2) est l'appareil de fonctionnement.

7. Détecteur de mouvement (2) selon l'une quelconque des revendications précédentes, dans lequel l'unité de commande (5) est conçue pour terminer le mode de configuration lorsque le signal radar évalué satisfait au critère de signalisation ou à un autre critère de signalisation et/ou après une durée prédéterminée.

8. Détecteur de mouvement (2) selon l'une quelconque des revendications précédentes, dans lequel l'unité de commande (5) est conçue pour, après la fin du mode de configuration, repasser à un mode de fonctionnement normal ou pour amener un appareil raccordé à elle à passer dans un mode de fonctionnement normal.

9. Détecteur de mouvement (2) selon l'une quelconque des revendications précédentes, dans lequel ledit détecteur de mouvement (2) comprend une unité de décodage, laquelle est conçue pour décoder des données codées dans des signaux radar.

10. Détecteur de mouvement (2) selon l'une quelconque des revendications précédentes, dans lequel le détecteur de mouvement (2) comporte une unité de codage, laquelle est conçue pour coder des données dans des signaux radar.

11. Appareil de technique du bâtiment (1), en particulier luminaire, comprenant au moins un détecteur de mouvement (2) selon l'une quelconque des revendications précédentes.

12. Appareil de technique du bâtiment (1) selon la revendication 11, lequel comporte au moins une antenne radar.

13. Appareil de configuration (8), présentant une unité de codage, laquelle est conçue pour coder des données de configuration pour un détecteur de mouvement selon la revendication 9 dans des signaux radar et les envoyer, et une unité de décodage,
laquelle est conçue pour, au moyen de signaux radar, décoder des données codées par d'un détecteur de mouvement selon la revendication 10, en particulier en ce qui concerne leur intensité ou fréquence, ainsi qu'au moins une antenne radar pour émettre et/ou recevoir des signaux radar.

14. Appareil de configuration (8) selon la revendication 13, dans lequel ledit appareil de configuration (8) présente une interface utilisateur (9).

15. Combinaison d'un détecteur de mouvement (2) selon la revendication 1 ou d'un appareil de fonctionnement de la technique du bâtiment (1) selon la revendication 11, de préférence un luminaire, avec un appareil de configuration (8) selon la revendication 13.
